(19) Europäisches Patentamt
European Patent Office
Office européen des brevets

(11) EP 3 936 544 A1

(12) EUROPEAN PATENT APPLICATION
published in accordance with Art. 153(4) EPC

(43) Date of publication:
**12.01.2022 Bulletin 2022/02**

(21) Application number: **20767146.2**

(22) Date of filing: **04.03.2020**

(51) Int Cl.:
***C08F 220/54** (2006.01)* ***H01M 4/13** (2010.01)*
***H01M 4/133** (2010.01)* ***H01M 4/62** (2006.01)*
***H01G 11/38** (2013.01)*

(86) International application number:
**PCT/JP2020/009217**

(87) International publication number:
**WO 2020/179831 (10.09.2020 Gazette 2020/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2019 JP 2019038913**

(71) Applicants:
- **Osaka University**
**Suita-shi, Osaka 565-0871 (JP)**
- **DAIKIN INDUSTRIES, LTD.**
**Osaka-shi, Osaka 530-8323 (JP)**

(72) Inventors:
- **HARADA, Akira**
**Suita-shi, Osaka 565-0871 (JP)**
- **YAMAGUCHI, Hiroyasu**
**Suita-shi, Osaka 565-0871 (JP)**
- **TAKASHIMA, Yoshinori**
**Suita-shi, Osaka 565-0871 (JP)**
- **HIRAGA, Kentarou**
**Osaka-shi, Osaka 530-8323 (JP)**
- **YAMAZAKI, Shigeaki**
**Osaka-shi, Osaka 530-8323 (JP)**
- **YAMAGUCHI, Fumihiko**
**Osaka-shi, Osaka 530-8323 (JP)**
- **SUGIYAMA, Akinari**
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) BINDER FOR ELECTROCHEMICAL DEVICES, ELECTRODE MIXTURE, ELECTRODE, ELECTROCHEMICAL DEVICE AND SECONDARY BATTERY

(57) Provided is a binder for an electrochemical device, which can follow the volume change of an electrode structure due to discharge and charge and can improve a life characteristic of the electrochemical device.
A binder for an electrochemical device, which is a binder for a secondary battery containing a polymer having at least one cyclic host group in a molecule, wherein the host group is present as a side chain of the polymer, and a main chain of the polymer penetrates through at least a part of the cyclic host groups.

EP 3 936 544 A1

## Description

Technical Field

The present disclosure relates to a binder for an electrochemical device, an electrode mixture, an electrode, an electrochemical device, and a secondary battery.

Background Art

In recent years, an electronic device such as a cellphone, a mobile personal computer, or a digital camera has rapidly become widespread, and the demand for an electrochemical device such as a small secondary battery has increased rapidly. Further, these devices have had higher performance and have been given an unprecedented function, and because of this, there is an increasing need for an electrochemical device that can withstand use under harsh conditions for a longer period of time.

Examples of the secondary battery include a lead battery, a NiCd battery, a nickel hydrogen battery, and a lithium battery, and in particular, a lithium battery has a high density per unit volume and weight, and the output thereof can be increased, and thus the demand therefor has increased rapidly.

These secondary batteries usually include a positive electrode and a negative electrode that are composed of a positive electrode or negative electrode active material, a binder, and a current collector, and the positive electrode and the negative electrode are separated from each other by a separator so as not to cause an electrical short circuit. The positive electrode, the negative electrode, and the separator are porous and are present in the state of being impregnated with an electrolytic solution.

Patent Literature 1 discloses a binder for a lithium battery, made of polyacrylic acid crosslinked with a specific cross-linking agent, for a lithium battery using silicon as an active material.

Patent Literature 2 discloses a binder for a lithium ion secondary battery negative electrode, which is a polymer having a plurality of cyclic molecules and a linear polymer, wherein the linear polymer penetrates through the plurality of cyclic molecules and has, at each of both ends of the linear polymer, a terminal group that causes steric hindrance to the plurality of cyclic molecules.

Patent Literature 3 discloses a polymer material having excellent toughness and strength and composed of a polymer containing a polymerizable monomer having a host group having a specific structure introduced thereinto.

Citation List

Patent Literature

Patent Literature 1: International Publication No. 2014/065407
Patent Literature 2: Japanese Patent Laid-Open No. 2018-174038
Patent Literature 3: International Publication No. 2018/159791

Summary of Invention

Technical Problem

The present disclosure provides a binder for an electrochemical device which can reduce the resistance of the electrochemical device and improve the capacity retention, and an electrode mixture, an electrode, an electrochemical device, and a secondary battery that comprise the same.

Solution to Problem

The present disclosure relates to a binder for an electrochemical device, which is a binder for a secondary battery comprising a polymer having at least one cyclic host group in a molecule, wherein the host group is present as a side chain of the polymer, and a main chain of the polymer penetrates through at least a part of the cyclic host groups.

The present disclosure is also a binder for an electrochemical device, which is a binder for a secondary battery comprising a polymer material containing a polymer having at least one cyclic host group in a molecule, wherein
the polymer is a polymer containing, in at least a part thereof, a constituent unit formed of a host group-containing polymerizable monomer, and represented by the following general formula (2a):

[Formula 1]

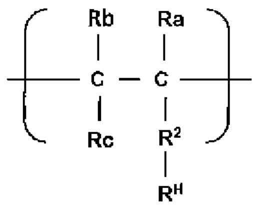

(2a)

wherein Ra represents a hydrogen atom, a methyl group, or a fluorine group; Rb represents a hydrogen atom or a fluorine group; Rc represents a hydrogen atom or a fluorine group; $R^2$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxy group, or $-C(O)NH-(CH_2)_n-O-C(O)-$ (n is 2 to 8); and $R^H$ represents the host group.

The present disclosure is also a binder for an electrochemical device, which is a binder for a secondary battery comprising a polymer material containing a polymer having at least one cyclic host group in a molecule, wherein the polymer is a polymer containing, in at least a part thereof, a constituent unit formed of a host group-containing polymerizable monomer and represented by the following general formula (h1):

[Formula 2]

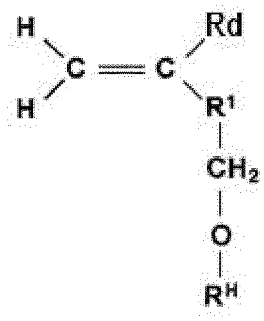

(h1)

wherein Rd represents a hydrogen atom or a methyl group; $R^H$ represents the host group; and $R^1$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxyl group.

The present disclosure is also an electrode mixture comprising the binder for an electrochemical device described above, an electrode active material, and a dispersion medium.

The present disclosure is also an electrode comprising the binder for an electrochemical device described above, an electrode active material, an electrolytic solution, and a current collector.

The electrode may be a positive electrode.

The electrode may be a negative electrode.

The electrode active material may contain a carbonaceous material in at least a part thereof.

The electrode active material may contain a silicon-containing compound in at least a part thereof.

The present disclosure is also an electrochemical device comprising the electrode described above.

The present disclosure is also a secondary battery comprising the electrode described above.

The secondary battery is preferably a lithium ion battery.

Advantageous Effects of Invention

The present disclosure can provide a binder for an electrochemical device which can reduce the resistance of

an electrochemical device and improve the capacity retention.

Description of Embodiments

Hereinafter, the present disclosure will be described in detail.

An electrochemical device converts electrical energy and chemical energy by exchanging an electron or an ion between electrodes, and generally includes a condenser, a capacitor, and a battery. An electron or a metal ion moves between the electrodes, and at this time, the metal ion is inserted into or removed from the active material contained in the electrodes. The insertion and removal of the metal ion causes a rapid volume change of the active material, and a defect such as a crack is likely to occur on the surface of a primary particle of the active material. Particularly in a high-capacity secondary battery, when a large amount of a metal ion moves in order to increase the output, the volume change becomes very large. Further, if the battery is discharged and charged for a long period of time, there is a problem that the active material is pulverized and the life of the battery is finally shortened..

From these viewpoints, the development of an active material and a binder that can follow the volume change due to discharge and charge has been required for the development of a long-life electrochemical device.

The role of the conventional binder is to bind an active material and a current collector at an electrode to form a strong electrode plate and assist an inherent characteristic of the active material. The binder for an electrochemical device according to the present disclosure has the performance as the conventional binder and has unprecedented excellent elongation, and thereby can follow the volume change of the electrode structure.

(Binder for electrochemical device)

The binder for an electrochemical device according to the present disclosure is made of a polymer having a cyclic host group in a side chain, wherein the main chain of the polymer penetrates through at least a part of the cyclic host groups. That is, the main chain of the polymer penetrates through the cyclic host group present in the side chain. Such a compound basically forms a complicated network structure because the main chain penetrates through the side chain of the polymer.

The crosslinked structure of a normal polymer material has a strong network structure in which polymer molecules are bonded by fixed cross-linking points. A problem is that when a strong stress is applied to such a polymer having cross-linking points fixed, the bond is broken from a position where the distance between the cross-linking points is short, resulting in non-uniform fracture.

On the other hand, the polymer of the present disclosure has a structure formed by the main chain of the polymer penetrating through the ring of the host group. That is, the structure is not a structure having fixed cross-linking points as described above, and is a structure in which the cyclic site of the host group can slide on the main chain of the polymer as a range of motion. Thereby, even if a strong stress is applied to the polymer, the action of relaxing the stress is exerted. As a result, the polymer of the present disclosure can have excellent toughness and strength, and can be a material having excellent fracture energy. In addition, the polymer exhibits excellent elongation.

Therefore, when the movable crosslinked polymer as described above is used as a binder for an electrochemical device, the binder has excellent elongation, and thus can follow a rapid volume change of the electrode without being fractured and reduce deterioration of the active material. In addition, because the polymer of the present disclosure is excellent in toughness and strength, the polymer can maintain the performance as a binder even after repeated discharge and charge.

The compound disclosed in Patent Literature 2 described above does not have such a structure, but has a molecular chain penetrating through a cyclic molecule and a main chain of a resin present as separate compounds. That is, the compound disclosed in Patent Literature 2 does not correspond to the polymer wherein the main chain of the resin penetrates through the cyclic host group of the side chain according to the present disclosure.

Therefore, the compound disclosed in Patent Literature 2 has a bulky functional group bonded to the terminal portion so that the host group does not fall off from the penetrating molecular chain.

The compound disclosed in Patent Literature 2 has the following problems: the synthesis of a compound having such a structure requires a plurality of steps and thus tends to be expensive; and the structure of the compound becomes complicated, and thus a physical property thereof tends to deteriorate when decomposition occurs, and because of this, durability based on long-term use tends to deteriorate. On the other hand, the material described in the present disclosure is superior to the above-described material because the material described in the present disclosure has the following features: a movable crosslinked structure is constructed at once during polymerization; and it is not necessary to bond a bulky functional group to the terminal portion.

The chemical structure in which the main chain penetrates through a cyclic host group as in the present disclosure can be observed by a spectroscopic technique such as NMR or a swelling test.

For the swelling test, for example, a polymer is prepared without using a chemical cross-linking agent and the

obtained polymer is added to a solvent. If a swelling phenomenon is then observed without dissolution, it can be determined that a movable crosslinked polymer is formed, whereas if the polymer is dissolved, it can be determined that no movable crosslinked polymer is formed.

For the binder for an electrochemical device in the present disclosure, the skeleton of the resin thereof is not particularly limited as long as the binder has the above-described chemical structure, and a binder having any of various resin skeletons can be used.

Examples of the resin structure that can be used as the binder for a secondary battery according to the present disclosure include a (meta)acrylic resin (acrylic polymer), a polyester-based resin, alkyd resin, polystyrene resin, melamine-formaldehyde resin, a polyisocyanate-based resin, a polyurethane-based resin, an epoxy-based resin, a vinyl chloride-based resin (for example, vinyl chloride-vinyl acetate copolymer), ketone resin, a polyamide-based resin, a polycarbonate-based resin, a polyacetal-based resin, petroleum resin, polyethylene, polypropylene, and an olefin-based resin obtained by polymerizing a chlorinated product or the like of such a polyolefin; a fluorine-based resin having a fluorine atom in at least a part thereof; an inorganic resin such as silica gel or silicic acid, or an elastomer (rubber) having the basic skeleton of such a resin.

Specific examples of the compound having such a structure include the compounds disclosed in Patent Literature 3 described above. Hereinafter, such compounds will be described in detail.

In the following description, the polymer of the present disclosure is referred to as a movable crosslinked polymer.

The binder for an electrochemical device according to the present disclosure is a binder containing a polymer having at least one cyclic host group in a molecule, wherein the host group is present as a side chain of the polymer, and a main chain of the polymer penetrates through at least a part of the cyclic host groups.

The host group in the present disclosure is not particularly limited as long as the host group is cyclic. Examples of the molecule for forming the host group (hereinafter, sometimes referred to as a "host site") include at least one selected from the group consisting of α-cyclodextrin, β-cyclodextrin, γ-cyclodextrin, calix[6]arenesulfonic acid, calix[8]arenesulfonic acid, 12-crown-4, 18-crown-6, [6]paracyclophane, [2,2]paracyclophane, cucurbit[6]uril, and cucurbit[8]uril. These host sites may have a substituent. That is, the host site may be a derivative of the host site.

The host site is preferably a cyclodextrin or a derivative thereof (the term cyclodextrin as used herein also includes a compound chemically derived from a cyclodextrin). It is preferred that the host site be preferably β-cyclodextrin, and more preferably γ-cyclodextrin. In this case, the aperture diameter of the cyclic molecule is large, and thus the proportion of the polymer main chain penetrating through the host molecule increases, and as a result, many movable crosslinks are formed, the polymer material has an improved mechanical property, and in particular, has excellent breakage strain and excellent elongation percentage and flexibility.

The type of the derivative of a cyclodextrin is not limited, and for example, a cyclodextrin derivative produced by a known method can be applied as a host site.

The host group may be a group in which a methylene group ($-CH_2-$) is bonded to an oxygen atom derived from a hydroxyl group of a cyclodextrin or a derivative thereof. In this case, the methylene group can be bonded to the main chain or a side chain of the polymer. The methylene group ($-CH_2-$) plays the role as a so-called linker between the polymer main chain and the cyclodextrin, which is a host site. This imparts flexibility to the polymer, and thus as a result, the polymer material has high breaking strain and excellent elongation and flexibility.

The methylene group can be bonded to a side chain of the polymer, and more specifically, when a side chain of the polymer has an ester group, a methylene group can be bonded to the oxygen atom of the ester group, and when a side chain of the polymer has an amide group, a methylene group can be bonded to the nitrogen atom of the amide group. In addition, the methylene group may be bonded to a C-C carbon atom of the main chain.

The main chain of the movable crosslinked polymer is not particularly limited as long as the polymer is obtained by polymerizing various polymerizable monomers, and may have a size allowing penetration through the cyclic host group.

The movable crosslinked polymer may contain, for example, a constituent unit represented by the general formula (2a) described later in at least a part thereof.

[Formula 3]

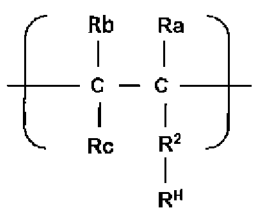

(2a)

wherein Ra represents a hydrogen atom, a methyl group, or a fluorine group; Rb represents a hydrogen atom or a

fluorine group; Rc represents a hydrogen atom or a fluorine group; $R^2$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxy group, or $-C(O)NH-(CH_2)_n-O-C(O)-$ (n is 2 to 8); and $R^H$ represents the host group.

In the formula (2a), when $R^2$ is a divalent group formed by removing one hydrogen atom from an alkoxy group optionally having one or more substituents, an example of the alkoxy group is an alkoxy group having 1 to 10 carbon atoms, specific examples thereof include a methoxy group, an ethoxy group, a propoxy group, an isopropoxy group, a butoxy group, an isobutoxy group, a sec-butoxy group, a pentyloxy group, and a hexyloxy group; and these can be linear or branched.

In the formula (2a), when $R^2$ is a divalent group formed by removing one hydrogen atom from a thioalkoxy group optionally having one or more substituents, an example of the thioalkoxy group is a thioalkoxy group having 1 to 10 carbon atoms, and specific examples thereof include a methylthio group, an ethylthio group, a propylthio group, an isopropylthio group, a butylthio group, an isobutylthio group, a sec-butylthio group, a pentylthio group, and a hexylthio group; and these can be linear or branched.

In the formula (2a), when $R^2$ is a divalent group formed by removing one hydrogen atom from an alkyl group optionally having one or more substituents, an example of the alkyl group is an alkyl group having 1 to 30 carbon atoms, and specific examples thereof include a methyl group, an ethyl group, propyl group, an isopropyl group, a butyl group, an isobutyl group, a sec-butyl group, a tert-butyl group, a pentyl group, an isopentyl group, a neopentyl group, and a hexyl group; and these can be linear or branched.

In the formula (2a), when $R^2$ is a divalent group formed by removing one hydrogen atom from an amino group optionally having one or more substituents, the nitrogen atom of the amino group can be bonded to a carbon atom in the main chain (C-C bond).

In the formula (2a), when $R^2$ is a divalent group formed by removing one hydrogen atom from an amide group optionally having one or more substituents, the carbon atom of the amide group can be bonded to a carbon atom in the main chain (C-C bond).

In the formula (2a), when $R^2$ is a divalent group formed by removing one hydrogen atom from an aldehyde group, the carbon atom of the aldehyde group can be bonded to a carbon atom in the main chain (C-C bond).

In the formula (2a), when $R^2$ is a divalent group formed by removing one hydrogen atom from a carboxy group, the carbon atom of the carboxy group can be bonded to a carbon atom in the main chain (C-C bond).

In the formula (2a), examples of $R^H$ include the host groups described above.

In formula (2a), $R^2$ is preferably a divalent group formed by removing one hydrogen atom from a monovalent group selected from the group consisting of an amide group and a carboxy group. That is, the constituent unit represented by the formula (2a) preferably has at least either one of a structure having an amide group in which a hydrogen atom is replaced with $R^H$ in a side chain and a structure having a carboxy group in which a hydrogen atom is replaced with $R^H$ in a side chain. In this case, the movable crosslinked polymer of the present disclosure is likely to be easily produced.

The constituent unit may have no fluorine group, and when the constituent unit has a fluorine group, the number of fluorine atoms is preferably 10 or less.

The structure represented by the above (2a) is a structure formed by polymerizing a monomer represented by the following general formula (2b):

[Formula 4]

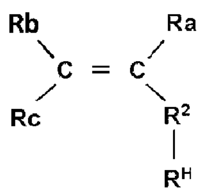

(2b)

wherein Ra, Rb, Rc, $R^2$, and $R^H$ are as defined for Ra, Rb, Rc, $R^2$, and $R^H$ in the formula (2a) .

The movable crosslinked polymer may have another constituent unit other than the structure represented by the formula (2a).

The movable crosslinked polymers of the present disclosure can also each have another constituent unit that does not contain a host group. Such a constituent unit is not limited, and may be a constituent unit copolymerizable with the constituent unit having a host group.

The constituent unit copolymerizable may contain, for example, a constituent unit represented by the following formula (3a):

[Formula 5]

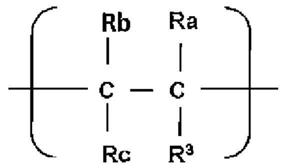

(3a)

wherein Ra is a hydrogen atom, a methyl group, or a fluorine group; Rb is a hydrogen atom or a fluorine group; Rc is a hydrogen atom or a fluorine group; and $R^3$ is fluorine, chlorine, bromine, iodine, a hydroxyl group, a thiol group, an amino group optionally having one or more substituents, a carboxy group optionally having one substituent, or an amide group optionally having one or more substituents.

In the formula (3a), when $R^3$ is a carboxy group having one substituent, examples of the carboxy group include a carboxy group in which the hydrogen atom of the carboxy group is replaced with an alkyl group (for example, a methyl group or an ethyl group) or a hydroxyalkyl group (for example, a hydroxymethyl group or a hydroxyethyl group).

In the formula (3a), when $R^3$ is an amide group having one or more substituents, that is, a secondary amide or a tertiary amide, examples of the amide group include an amide group in which at least one hydrogen atom or two hydrogen atoms of the primary amide are replaced with an alkyl group (for example, a methyl group or an ethyl group) or a hydroxyalkyl group (for example, a hydroxymethyl group or a hydroxyethyl group).

In addition, in the formula (3a), $R^3$ is preferably an amino group; an amide group; an amide group in which a hydrogen atom is replaced with an alkyl group, a hydroxyl group, or an alkoxyl group; a carboxy group; or a carboxy group in which a hydrogen atom is replaced with an alkyl group, a hydroxyalkyl group (for example, a hydroxyethyl group), or an alkoxyl group.

Ra, Rb, and Rc in the formulas (2a) and (3a) may be identical to or different from each other.

The structure represented by the above (3a) is a structure formed by polymerizing a monomer represented by the following general formula (3b):

[Formula 6]

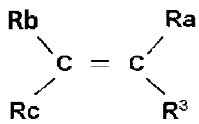

(3b)

wherein Ra, Rb, Rc, and $R^3$ are as defined in the formula (3a).

The macromolecule that is a polymer containing, in at least a part thereof, a constituent unit formed of a host group-containing polymerizable monomer which is represented by the following general formula (h1) is also a binder for an electrochemical device according to the present disclosure:

[Formula 7]

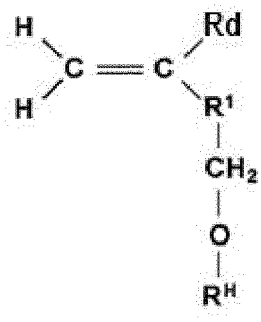

(h1)

wherein Rd represents a hydrogen atom or a methyl group; $R^H$ represents the host group; and $R^1$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxyl group.

Alternatively, examples of the host group-containing polymerizable monomer include a compound represented by the following general formula (h2):

[Formula 8]

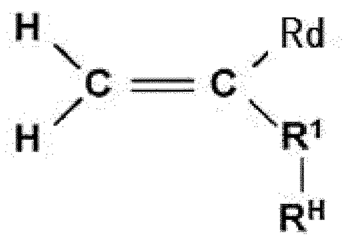

(h2)

wherein Rd, $R^H$, and $R^1$ are as defined for Rd, $R^H$, and $R^1$ in the formula (h1), respectively.

Further, examples of the host group-containing polymerizable monomer include a compound represented by the following general formula (h3):

[Formula 9]

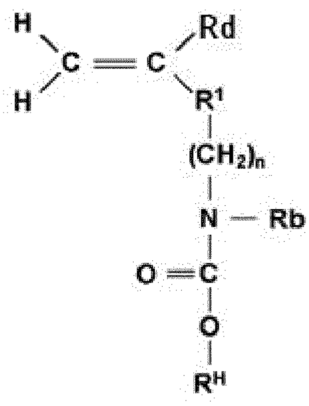

(h3)

wherein Rd, $R^H$, and $R^1$ are as defined for Rd, $R^H$, and $R^1$ in the formula (h1), respectively; n is an integer of 1 to 20, preferably 1 to 10, and more preferably 1 to 5; and Rb is hydrogen or an alkyl group having 1 to 20 carbon atoms (preferably an alkyl group having 1 to 10 carbon atoms, and more preferably an alkyl group having 1 to 6 carbon atoms).

The host group $R^H$ in the host group-containing polymerizable monomer represented by each of the formulas (h1) to (h3) is an example of the case of being a monovalent group obtained by removing one hydroxyl group from a cyclodextrin derivative.

In addition, the host group-containing polymerizable monomer can be one of the compounds represented by the formulas (h1) to (h3) alone, or can contain two or more thereof. In this case, Rd of the formulas (h1) to (h3) may be identical to or different from each other. Similarly, $R^H$ of the formulas (h1) to (h3) and $R^1$ of the formulas (h1) to (h3) may each be identical to or different from each other.

The substituents defined by the formulas (h1) to (h3) are not particularly limited. Examples of the substituents include an alkyl group having 1 to 20 carbon atoms, an alkenyl group having 2 to 20 carbon atoms, an alkynyl group having 2 to 20 carbon atoms, a halogen atom, a carboxyl group, a carbonyl group, a sulfonyl group, a sulfone group, and a cyano group.

In the formulas (h1) to (h3), when $R^1$ is a divalent group formed by removing one hydrogen atom from an amino group optionally having one or more substituents, the nitrogen atom of the amino group can be bonded to a carbon atom

of a C=C double bond.

In the formulas (h1) to (h3), when $R^1$ is a divalent group formed by removing one hydrogen atom from an amide group optionally having one or more substituents, the carbon atom of the amide group can be bonded to a carbon atom of a C=C double bond.

In the formulas (h1) to (h3), when $R^1$ is a divalent group formed by removing one hydrogen atom from an aldehyde group optionally having one or more substituents, the carbon atom of the aldehyde group can be bonded to a carbon atom of a C=C double bond.

In the formulas (h1) to (h3), when $R^1$ is a divalent group formed by removing one hydrogen atom from a carboxyl group optionally having one or more substituents, the carbon atom of the carboxyl group can be bonded to a carbon atom of a C=C double bond.

The host group-containing polymerizable monomers represented by (h1) to (h3) are each preferably a (meth)acrylic acid ester derivative (that is, $R^1$ is - COO-) and a (meth)acrylamide derivative (that is, $R^1$ is - CONH- or -CONR-, and R is as defined for the above-described substituent). In this case, the polymerization reaction can easily proceed, and the toughness and strength of the polymer material obtained can also be higher. As used herein, the term (meth)acrylic refers to either acrylic or methacrylic.

R of -CONR- is, for example, preferably an alkyl group having 1 to 20 carbon atoms, more preferably an alkyl group having 1 to 10 carbon atoms, and particularly preferably an alkyl group having 1 to 6 carbon atoms.

Specific examples of the host group-containing polymerizable monomer represented by the formula (h1) include the compounds of the following (h1-1) to (h1-6) derived from α-cyclodextrin, β-cyclodextrin, and γ-cyclodextrin (the figures are each a schematic diagram showing a cyclic shape, and all glucose units are α-1,4-glycosidically bound).

[Formula 10]

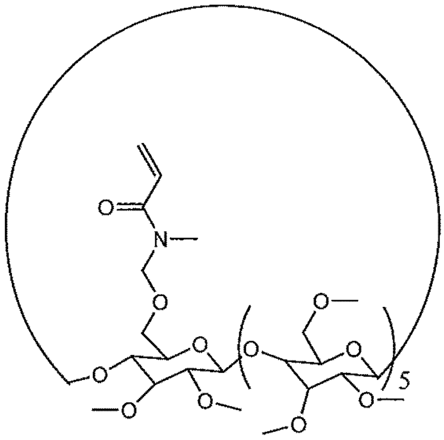

(h1-1)

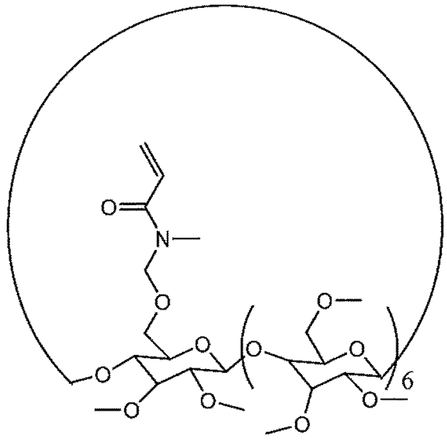

(h1-2)

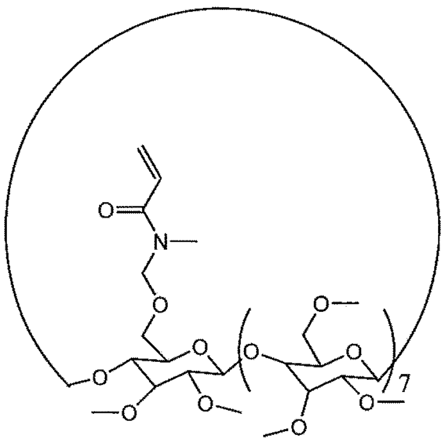

(h1-3)

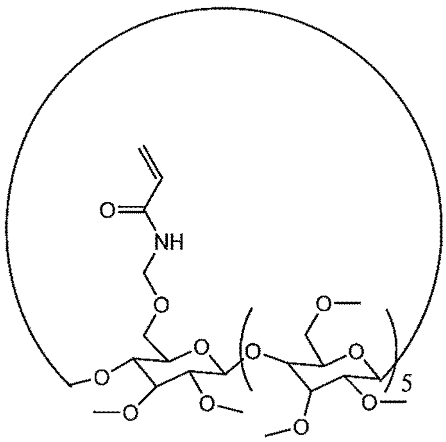

(h1-4)

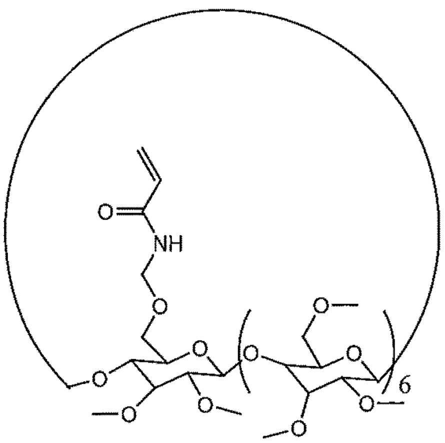

(h1-5)

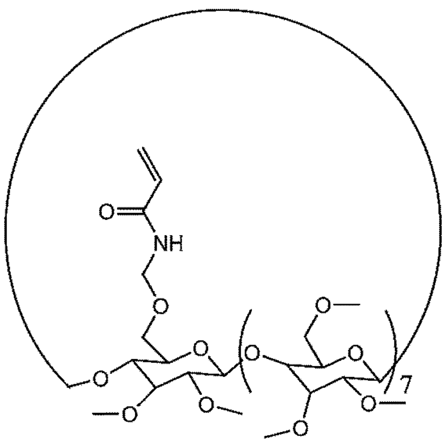

(h1-6)

The compounds represented by the formulas (h1-1), (h1-2), and (h1-3), wherein $R^1$ in the formula (h1) is -CONR- (R = a methyl group), have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group. In the compounds represented by these (h1-1), (h1-2), and (h1-3), methyl replacement of the nitrogen atom of the amide site in each compound can be performed by the same reaction as methyl replacement of the hydrogen atoms of the hydroxyl groups in the cyclodextrin derivative described later. That is, there is the following advantage: the cyclodextrin site and the amide site can be methylated in a one-step reaction, and the compounds represented by the formulas (h1-1), (h1-2), and (h1-3) can be easily obtained. The same also applies to formulas (h2-1), (h2-2), and (h2-3) described later.

The compounds represented by the formulas (h1-4), (h1-5), and (h1-6), wherein $R^1$ in the formula (h1) is -

CONH-, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group.

Further, specific examples of the host group-containing polymerizable monomer represented by the formula (h1) include the compounds of the following (h1-7) to (h1-9) derived from α-cyclodextrin, β-cyclodextrin, and γ-cyclodextrin (the figures are each a schematic diagram showing a cyclic shape, and all glucose units are α-1,4-glycosidically bound).

[Formula 11]

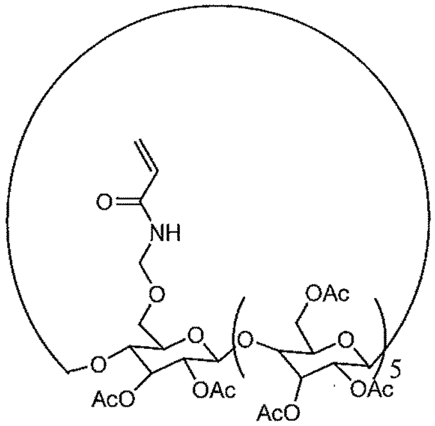

(h1-7)

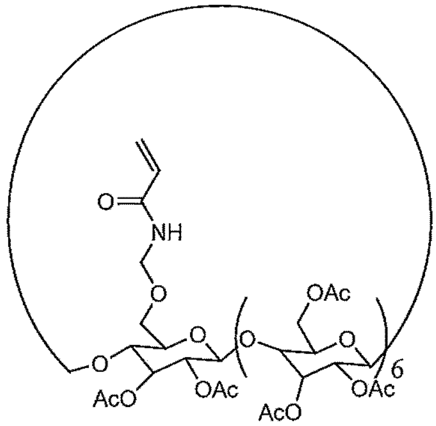

(h1-8)

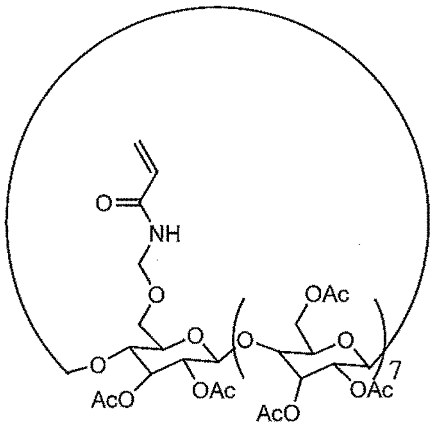

(h1-9)

The compounds represented by the formulas (h1-7), (h1-8), and (h1-9), wherein $R^1$ in the formula (h1) is -CONH-, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with an acetyl group (indicated as "Ac" in each formula).

Further, specific examples of the host group-containing polymerizable monomer represented by the formula (h1) include the compound of the following formula (h1-10) derived from α-cyclodextrin, β-cyclodextrin, and γ-cyclodextrin (the figure is a schematic diagram showing a cyclic shape, and all glucose units are α-1,4-glycosidically bound).

[Formula 12]

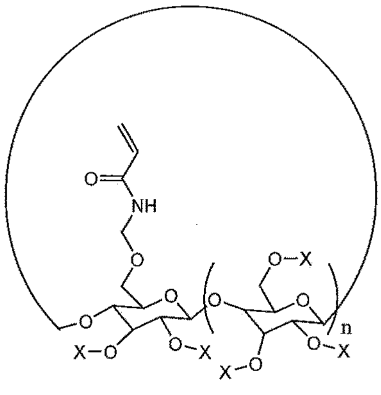

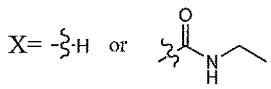

(h1-10)

wherein at least one X is a hydrogen atom, and at least one X is $-CONHC_2H_5$ (ethylcarbamate group); and n is 5, 6, or 7.

The compound represented by the formula (h1-10), wherein $R^1$ in the formula (h1) is -CONH-, has a host group obtained by removing one hydroxyl group from the cyclodextrin derivative. In addition, the hydrogen atoms of a number N-1 of hydroxyl groups in the cyclodextrin derivative are replaced with the X.

Specific examples of the host group-containing polymerizable monomer represented by the formula (h2) include the compounds of the following (h2-1) to (h2-9) derived from α-cyclodextrin, β-cyclodextrin, and γ-cyclodextrin (the figures are each a schematic diagram showing a cyclic shape, and all glucose units are α-1,4-glycosidically bound).

[Formula 13]

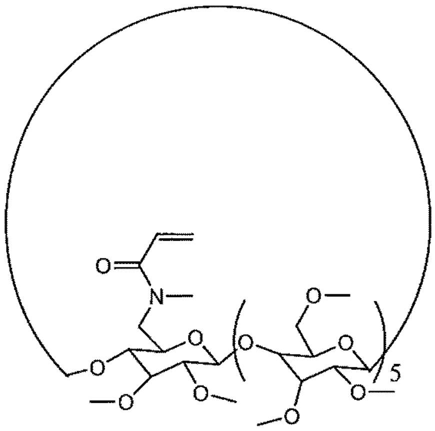

(h2-1)

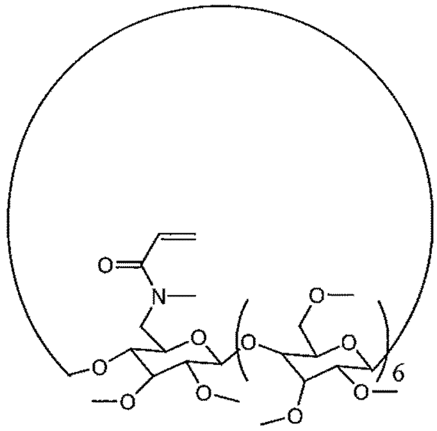

(h2-2)

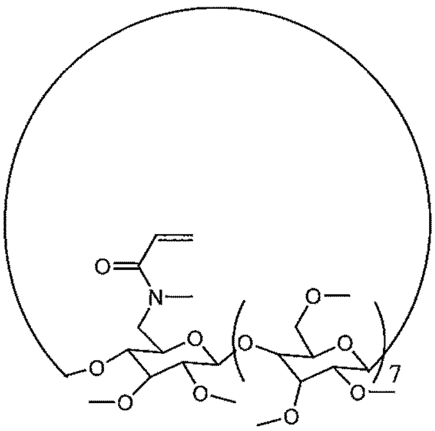

(h2-3)

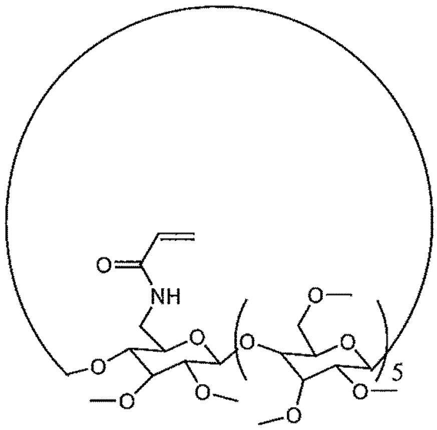

(h2-4)

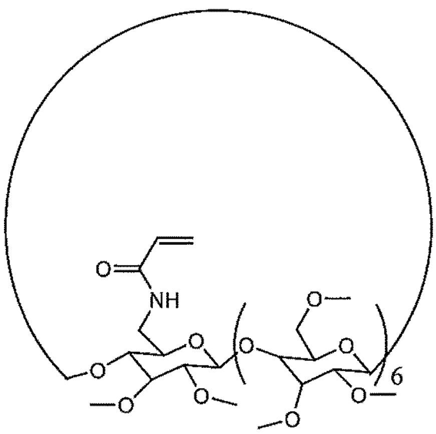

(h2-5)

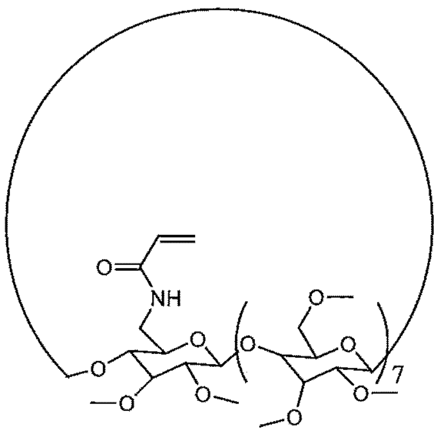

(h2-6)

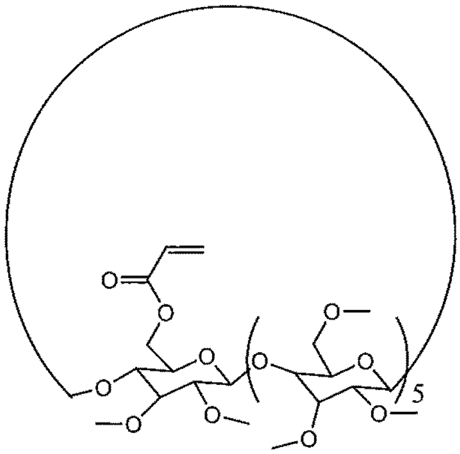

(h2-7)

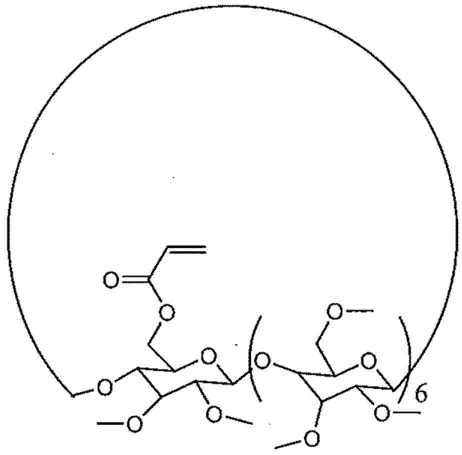

(h2-8)

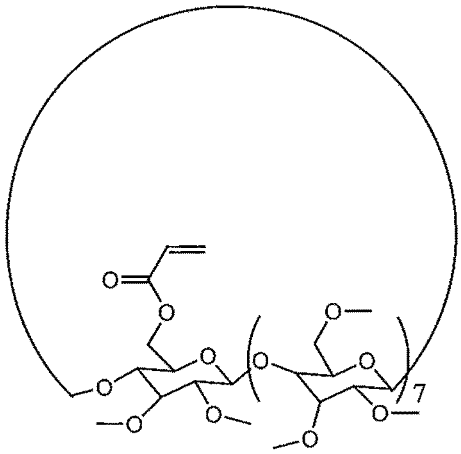

(h2-9)

The compounds represented by the formulas (h2-1), (h2-2), and (h2-3), wherein $R^1$ in the formula (h2) is -CONR- (R = a methyl group), have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group.

The compounds represented by the formulas (h2-4), (h2-5), and (h2-6), wherein $R^1$ in the formula (h2) is -CONH-, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group.

The compounds represented by the formulas (h2-7), (h2-8), and (h2-9), wherein $R^1$ in the formula (h2) is -COO-, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group.

Specific examples of the host group-containing polymerizable monomer represented by the formula (h3) include the compounds of the following (h3-1) to (h3-3) derived from α-cyclodextrin, β-cyclodextrin, and γ-cyclodextrin (the figures are each a schematic diagram showing a cyclic shape, and all glucose units are α-1,4-glycosidically bound).

[Formula 14]

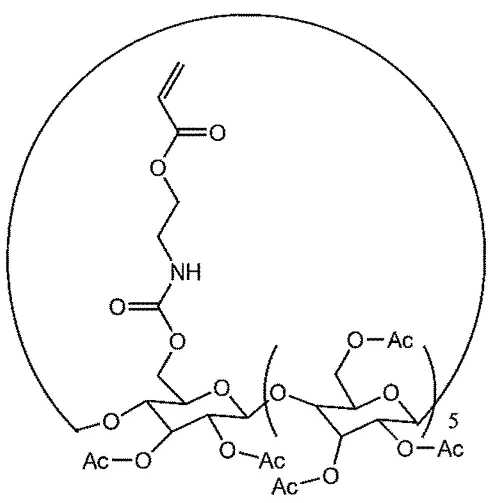

(h3-1)

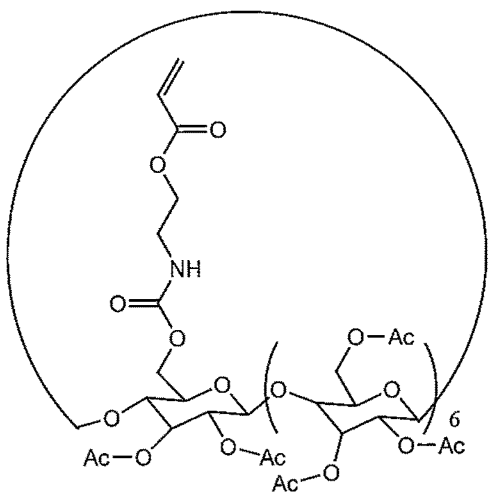

(h3-2)

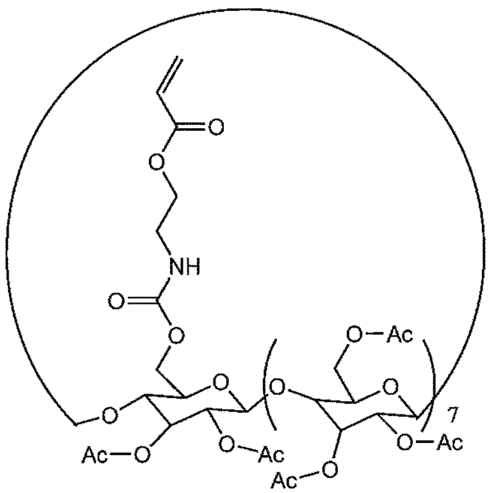

(h3-3)

The compounds represented by the formulas (h3-1), (h3-2), and (h3-3), wherein $R^1$ in the formula (h3) is -COO-, n = 2, and Rb is a hydrogen atom, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with an acetyl group (Ac). In the formulas (h3-1), (h3-2), and (h3-3), the hydrogen atom at the position of Rb may be replaced with a methyl group.

The host group-containing polymerizable monomers represented by the above (h1-1) to (h1-9), (h2-1) to (h2-9), and (h3-1) to (h3-3) is each an acrylic type, and the effects of the present disclosure are not inhibited even if the structure is such that the hydrogen at the meta position is replaced with a methyl group, that is, a methacrylic type.

Polymerization can also be performed by combining polymerizable monomers other than the host group-containing polymerizable monomers represented by the above formulas (h1) to (h3).

The other polymerizable monomers are not particularly limited, and examples thereof include a copolymerizable monomer containing a constituent unit represented by any of the above formulas.

In addition, the movable crosslinked polymer of the present disclosure described above is particularly preferable in that the movable crosslinked polymer has higher durability and is less likely to be fractured than the one having polyethylene glycol as the main chain disclosed in Patent Literature 2 or the like because in the former, the main chain can be composed of a C-C bond.

In the movable crosslinked polymer of the present disclosure, the proportion of the host group is preferably in the range of 0.001 as the lower limit to 0.3 as the upper limit (weight ratio) relative to the total solid content of the movable

crosslinked polymer. The lower limit is more preferably 0.01, and the upper limit is more preferably 0.2. If the proportion of the host group is less than the lower limit, a sufficient effect may not be obtained. If the proportion of the host group exceeds the upper limit, the elongation of the polymer may be reduced.

The movable crosslinked polymer of the present disclosure may or may not further have a guest group, and preferably has no guest group. The "guest group" as used here means a functional group that is included in the host group.

(Electrode mixture)

The present disclosure is also an electrode mixture comprising the binder for an electrochemical device described above, an electrode active material, and water or a non-aqueous solvent. The electrode active material is divided into a positive electrode active material and a negative electrode active material. The positive electrode active material and the negative electrode active material are not limited, and examples thereof include ones used in a known electrochemical device such as a secondary battery such as a lead battery, a NiCd battery, a nickel hydrogen battery, a lithium ion battery, or an alkali metal sulfur battery, or an electric double layer capacitor.

<Positive electrode>

The positive electrode active material is not particularly limited, and examples thereof include one used in a known electrochemical device. The positive electrode active material of the lithium ion secondary battery will be specifically described below; the positive electrode active material is not particularly restricted as long as it can electrochemically absorb and desorb a lithium ion, and examples thereof include a lithium-containing transition metal composite oxide, a lithium-containing transition metal phosphoric acid compound, a sulfur-based material, and a conductive polymer. Among these, the positive electrode active material is preferably a lithium-containing transition metal composite oxide or a lithium-containing transition metal phosphoric acid compound, and particularly preferably a lithium-containing transition metal composite oxide that produces a high voltage.

The transition metal of the lithium-containing transition metal composite oxide is preferably V, Ti, Cr, Mn, Fe, Co, Ni, Cu, or the like, and specific examples of the lithium transition metal composite oxide include a lithium-cobalt composite oxide such as $LiCoO_2$, a lithium-nickel composite oxide such as $LiNiO_2$, a lithium-manganese composite oxide such as $LiMnO_2$, $LiMn_2O_4$, or $Li_2MnO_3$, and such lithium transition metal composite oxides in which a part of the transition metal atoms that predominantly constitute the same is replaced with another metal such as Al, Ti, V, Cr, Mn, Fe, Co, Li, Ni, Cu, Zn, Mg, Ga, Zr, or Si. Examples of those involving the above-described replacement include lithium-nickel-manganese composite oxide, lithium-nickel-cobalt-aluminum composite oxide, lithium-nickel-cobalt-manganese composite oxide, lithium-manganese-aluminum composite oxide, and lithium-titanium composite oxide, and more specifical examples include $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, $LiMn_{1.8}Al_{0.2}O_4$, $LiMn_{1.5}Ni_{0.5}O_4$, $Li_4Ti_5O_{12}$, and $LiNi_{0.82}Co_{0.15}Al_{0.03}O_2$.

The transition metal of the lithium-containing transition metal phosphoric acid compound is preferably V, Ti, Cr, Mn, Fe, Co, Ni, Cu, or the like, and specific examples of the lithium-containing transition metal phosphoric acid compound include an iron phosphate such as $LiFePO_4$, $Li_3Fe_2(PO_4)_3$, or $LiFeP_2O_7$, a cobalt phosphate such as $LiCoPO_4$, and such lithium transition metal phosphoric acid compounds in which a part of the transition metal atoms that predominantly constitute the same is replaced with another metal such as Al, Ti, V, Cr, Mn, Fe, Co, Li, Ni, Cu, Zn, Mg, Ga, Zr, Nb, or Si.

In particular, from the viewpoint of high voltage, high energy density, charge/discharge cycle characteristics, and the like, $LiCoO_2$, $LiNiO_2$, $LiMn_2O_4$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiFePO_4$ are preferable.

Examples of the sulfur-based material include a material containing a sulfur atom, and at least one selected from the group consisting of elemental sulfur, a metal sulfide, and an organic sulfur compound is preferable, and elemental sulfur is more preferable. The metal sulfide may be a metal polysulfide. The organic sulfur compound may be an organic polysulfide.

Examples of the metal sulfide include a compound represented by $LiS_x$ ($0 < x \leq 8$); a compound represented by $Li_2S_x$ ($0 < x \leq 8$); a compound having a two-dimensional layered structure such as $TiS_2$ or $MoS_2$; and a Chevrel compound having a strong three-dimensional skeleton structure represented by the general formula $Me_xMo_6S_8$ (Me is any of various transition metals such as Pb, Ag, and Cu) .

Examples of the organic sulfur compound include a carbon sulfide compound.

The organic sulfur compound may be carried on a material having a pore such as carbon and used as a carbon composite material in some cases. The content of sulfur contained in the carbon composite material is preferably 10 to 99% by weight, more preferably 20% by weight or more, further preferably 30% by weight or more, and particularly preferably 40% by weight or more, and preferably 85% by weight or less, based on the carbon composite material, because the cycle performance is further better and the overvoltage is further reduced.

When the positive electrode active material is the elemental sulfur, the content of sulfur contained in the positive electrode active material is equal to the content of the elemental sulfur.

Examples of the conductive polymer include a p-doped conductive polymer and an n-doped conductive polymer. Examples of the conductive polymer include polyacetylene-based, polyphenylene-based, and heterocyclic polymers, ionic polymers, and ladder and network polymers.

In addition, a substance having a composition different from that of the substance predominantly constituting the positive electrode active material can also be used to attach it to the surface of the positive electrode active material. Examples of the surface attached substance include an oxide such as aluminum oxide, silicon oxide, titanium oxide, zirconium oxide, magnesium oxide, calcium oxide, boron oxide, antimony oxide, or bismuth oxide; a sulfate such as lithium sulfate, sodium sulfate, potassium sulfate, magnesium sulfate, calcium sulfate, or aluminum sulfate; a carbonate such as lithium carbonate, calcium carbonate, or magnesium carbonate; and an organic polymer.

The surface attached substance can be attached to the surface of the positive electrode active material, for example, by a method of dissolving or suspending the substance in a solvent to add the solution or suspension to a positive electrode active material by impregnation, and then drying the active material; a method of dissolving or suspending a precursor of the surface attached substance in a solvent to add the solution or suspension to a positive electrode active material by impregnation, and then causing a reaction by heating or the like; or a method of adding the substance to a precursor of a positive electrode active material and at the same time, firing the resulting mixture.

The surface attached substance is used in an amount of, as the lower limit, preferably 0.1 ppm or more, more preferably 1 ppm or more, and further preferably 10 ppm or more, and, as the upper limit, preferably 20% or less, more preferably 10% or less, and further preferably 5% or less, by weight based on the amount of the positive electrode active material. The surface attached substance can suppress the oxidation reaction of the non-aqueous electrolytic solution on the surface of the positive electrode active material and improve the battery life, but if the amount attached is too low, the effect thereof is not sufficiently developed, whereas if the amount attached is too high, the surface attached substance may inhibit the entry and exit of a lithium ion and thus the resistance increases in some cases.

Examples of the shape of a particle of the positive electrode active material used include a lump shape, a polyhedral shape, a spherical shape, an oval spherical shape, a plate shape, a needle shape, and a columnar shape, which are conventionally used, and among these, the shape of a secondary particle formed by aggregation of a primary particle is preferably spherical or oval spherical. Usually, in an electrochemical element, the active material in the electrode expands and contracts with the charge and discharge thereof, and thus the stress is likely to cause a deterioration such as fracture of the active material or breakage of the conductive path. Because of this, a particle active material obtained by aggregation of the primary particle to form the secondary particle is more preferable than the single particle active material containing only the primary particle because the former relaxes the stress of expansion and contraction to prevent a deterioration. In addition, a spherical or oval spherical particle is less oriented in shaping of an electrode than an axis-oriented particle such as a plate-shaped particle, and thus the expansion and contraction of the electrode during charge and discharge is also smaller, and even when mixed with a conductive agent in creation of the electrode, the spherical or oval spherical particle is easily mixed therewith uniformly, and thus is preferable.

The positive electrode active material has a tap density of usually 1.5 $g/cm^3$ or more, preferably 2.0 $g/cm^3$ or more, further preferably 2.5 $g/cm^3$ or more, and most preferably 3.0 $g/cm^3$ or more. If the tap density of the positive electrode active material is less than the above lower limit, the amount of a dispersion medium required in formation of a positive electrode active material layer may increase, the amounts of a conductive material and a binder required may increase, the rate of filling the positive electrode active material layer with the positive electrode active material may be restricted, and the battery capacity may be restricted, in some cases. Use of a metal composite oxide powder having a high tap density allows formation of a high-density positive electrode active material layer. A larger tap density is generally more preferable, the upper limit thereof is not set, and the tap density is usually 4.5 $g/cm^3$ or less and preferably 4.3 $g/cm^3$ or less.

The tap density of the positive electrode active material is determined as follows: the positive electrode active material is passed through a sieve having an opening size of 300 μm, a sample is dropped into a 20-$cm^3$ tapping cell to fill the cell volume, and then a powder density measuring instrument (for example, Tap Denser manufactured by Seishin Enterprise Co., Ltd.) is used to perform tapping at a stroke length of 10 mm 1000 times, and the density obtained from the volume and the weight of the sample at that time is defined as the tap density.

The positive electrode active material particle has a median size d50 (secondary particle size when a primary particle aggregates to form a secondary particle) of usually 0.1 μm or more, preferably 0.5 μm or more, more preferably 1 μm or more, and most preferably 3 μm or more, and usually 20 μm or less, preferably 18 μm or less, more preferably 16 μm or less, and most preferably 15 μm or less. If the median size is less than the above lower limit, a high bulk density product may not be obtained in some cases, and if the median size exceeds the upper limit, dispersion of lithium in the particle takes a longer time, which may thus, in some cases, cause a problem such as degradation in battery performance or formation of a streak when a positive electrode of a battery is created, that is, when the active material, a conductive agent, a binder, or the like is slurried with a solvent and applied in the form of a thin film. Here, it is also

possible to further improve the filling properties when the positive electrode is created, by mixing two or more positive electrode active materials having different median diameters d50.

The median size d50 in the present disclosure is measured using a known laser diffraction/scattering type particle size distribution measuring instrument. When LA-920 manufactured by HORIBA, Ltd. is used as a particle size distribution analyzer, the median size is measured using a 0.1 wt% sodium hexametaphosphate aqueous solution as a dispersion medium used in the measurement, and by setting the measurement refractive index to 1.24 after ultrasonic dispersion for 5 minutes.

When the primary particle aggregates to form a secondary particle, the average primary particle size of the positive electrode active material is usually 0.01 μm or more, preferably 0.05 μm or more, further preferably 0.08 μm or more, and most preferably 0.1 μm or more, and usually 3 μm or less, preferably 2 μm or less, further preferably 1 μm or less, and most preferably 0.6 μm or less. If the average primary particle size exceeds the above upper limit, it is difficult to form a spherical secondary particle, which may adversely affect the powder filling properties and greatly reduce the specific surface area, and thus be likely to reduce battery performance characteristics such as output characteristics in some cases. On the contrary, if the average primary particle size is less than the above lower limit, a crystal is usually underdeveloped, and thus a problem such as poor reversibility of charge/discharge may occur in some cases. The primary particle size is measured by observation using a scanning electron microscope (SEM). Specifically, in a photograph at a magnification of 10000, the longest value of the intercept by the left and right boundary lines of a primary particle with respect to the straight line in the horizontal direction is obtained for any 50 primary particles, and the average value thereof is taken as the average primary particle size.

The BET specific surface area of the positive electrode active material is 0.2 $m^2/g$ or more, preferably 0.3 $m^2/g$ or more, and further preferably 0.4 $m^2/g$ or more, and 50 $m^2/g$ or less, preferably 10 $m^2/g$ or less, and further preferably 5.0 $m^2/g$ or less. If the BET specific surface area is smaller than this range, the battery performance tends to deteriorate, and if the BET specific surface area is larger, the tap density does not easily increase, and a problem may easily occur with the applicability during formation of the positive electrode active material in some cases.

The BET specific surface area is determined as follows: a sample is predried under nitrogen gas circulation at 150°C for 30 minutes and then is subjected to measurement using a surface meter (for example, a fully automatic surface area measuring instrument manufactured by Okura Riken), using a nitrogen-helium mixed gas accurately adjusted such that the value of the relative pressure of nitrogen with respect to atmospheric pressure is 0.3, and by a nitrogen adsorption BET one-point method by a gas flow method, and the measured value is defined as the BET specific surface area.

As a method of producing a positive electrode active material, a method that is general as a method of producing an inorganic compound is used. In particular, various methods can be considered for producing a spherical or oval spherical active material, and examples thereof include a method in which a transition metal source material such as a nitrate or a sulfate of a transition metal and optionally a source material of another element are dissolved or crushed and dispersed in a solvent such as water, the pH of the resulting liquid is regulated with stirring to create and recover a spherical precursor, the recovered precursor is optionally dried, then a Li source such as LiOH, $Li_2CO_3$, or $LiNO_3$ is added, the resulting mixture is fired at a high temperature to obtain an active material; a method in which a transition metal source material such as a nitrate, a sulfate, a hydroxide, or an oxide and optionally a source material of another element are dissolved or crushed and dispersed in a solvent such as water, then the resulting liquid is sprayed and shaped using a spray dryer or the like into a spherical or oval spherical precursor, a Li source such as LiOH, $Li_2CO_3$, and $LiNO_3$ is added thereto, the resulting mixture is fired at a high temperature to obtain an active material; and a method in which a transition metal source material such as a nitrate, a sulfate, a hydroxide, or an oxide, a Li source such as LiOH, $Li_2CO_3$, and $LiNO_3$, and optionally a source material of another element are dissolved or crushed and dispersed in a solvent such as water, then the resulting liquid is sprayed and shaped using a spray dryer or the like into a spherical or oval spherical precursor, and this precursor is fired at a high temperature to obtain an active material.

In the present disclosure, one positive electrode active material may be used alone, or two or more positive electrode active materials having different compositions or different powder physical properties may be used together in any combination and at any ratio.

<Negative electrode>

The negative electrode is composed of a negative electrode active material layer containing a negative electrode active material, and a current collector. The negative electrode active material is not particularly limited, and examples thereof include one used in a known electrochemical device. The positive electrode active material of the lithium ion secondary battery will be specifically described below; the positive electrode active material is not particularly limited as long as it can electrochemically absorb and desorb a lithium ion. Specific examples thereof include a carbonaceous material, an alloy-based material, a lithium-containing metal composite oxide material, and a conductive polymer. One of these may be used alone or two or more may be used together in any combination.

The carbonaceous material that can absorb and desorb lithium is preferably artificial graphite produced by

high-temperature treatment of graphitizable pitch obtained from various raw materials or purified natural graphite, or a material obtained by surface treatment of one of these graphites with pitch or another organic substance followed by carbonization; and more preferably a carbonaceous material selected from natural graphite, artificial graphite, a carbonaceous material obtained by heat-treating an artificial carbonaceous substance and an artificial graphite substance one or more times in the range of 400 to 3200°C, a carbonaceous material in which a negative electrode active material consists of at least two carbonaceous substances having different crystallinities and/or has an interface at which the carbonaceous substances having different crystallinities are in contact with each other, and a carbonaceous material in which a negative electrode active material layer has an interface at which at least two carbonaceous substances having different orientations are in contact with each other, because it has a good balance between the initial irreversible capacity and the charge/discharge characteristics at high current density. One of these carbonaceous materials can be used alone, or two or more thereof can be used together in any combination and at any ratio.

Examples of the carbonaceous material obtained by heat-treating an artificial carbonaceous substance and an artificial graphite substance one or more times in the range of 400 to 3200°C include a carbon nanotube, graphene, a coal-based coke, a petroleum-based coke, a coal-based pitch, a petroleum-based pitch and those obtained by oxidizing these pitches, needle coke, pitch coke, and carbon materials obtained by partially graphitizing these cokes, furnace black, acetylene black, a pyrolysate of an organic substance such as a pitch-based carbon fiber, a carbonizable organic substance and a carbonization product thereof, and a solution obtained by dissolving a carbonizable organic substance in a low molecular weight organic solvent such as benzene, toluene, xylene, quinoline, or n-hexane and a carbonization product thereof.

A metal material (excluding lithium titanium composite oxide) used as the negative electrode active material is not restricted and may be any of elemental lithium, an elemental metal and an alloy forming a lithium alloy, or a compound such as oxides, carbides, nitrides, silicides, sulfides, or phosphides thereof as long as it can absorb and desorb lithium. The elemental metal and alloy forming a lithium alloy are preferably a material containing group 13 and group 14 metal/semi-metal elements, and more preferably elemental metals of aluminum, silicon, and tin (hereinafter, abbreviated as "specific metal elements") and an alloy or a compound containing these atoms. One of these may be used alone, or two or more thereof may be used together in any combination and at any ratio.

Examples of the negative electrode active material having at least one atom selected from the specific metal elements include an elemental metal of any one specific metal, an alloy consisting of two or more specific metal elements, an alloy consisting of one or two or more specific metal elements and one or two or more other metal elements, and a compound containing one or two or more specific metal elements, and a composite compound such as an oxide, a carbide, a nitride, and a silicate, a sulfide, or a phosphate of the compound. Use of such an elemental metal, an alloy, or a metal compound as the negative electrode active material can increase the capacity of the battery.

As a metal particle that can be alloyed with Li, any conventionally known metal particle can be used, and from the viewpoint of capacity and cycle life, the metal particle is preferably a metal selected from the group consisting of Fe, Co, Sb, Bi, Pb, Ni, Ag, Si, Sn, Al, Zr, Cr, P, S, V, Mn, Nb, Mo, Cu, Zn, Ge, In, Ti, and the like or a compound thereof. In addition, an alloy consisting of two or more metals may be used, and the metal particle may be an alloy particle formed by two or more metal elements. Among these, a metal selected from the group consisting of Si, Sn, As, Sb, Al, Zn, and W or a metal compound thereof is preferable.

Examples of the metal compound include a metal oxide, a metal nitride, and a metal carbide. In addition, an alloy consisting of two or more metals may be used.

In addition, further examples include a compound in which such a composite compound is complicatedly bonded to an elemental metal, an alloy, or several elements such as a non-metal element. Specifically, for example for silicon and tin, an alloy of such an element and a metal that does not act as a negative electrode can be used. For example, in the case of tin, a complicated compound containing 5 or 6 elements, obtained by combining tin, a metal that acts as a negative electrode, except for silicon, a metal that does not act as a negative electrode, and a non-metal element can also be used.

Among the metal particles that can be alloyed with Li, Si or a Si metal compound is preferable. The Si metal compound is preferably a Si metal oxide. Si or the Si metal compound is preferable in terms of increasing the capacity. As used herein, Si or a Si metal compound is collectively referred to as a Si compound. Specific examples of the Si compound include SiOx, SiNx, SiCx, and SiZxOy (Z = C or N). The Si compound is preferably a Si metal oxide, and the Si metal oxide is SiOx as represented by a general formula. This general formula SiOx is obtained using silicon dioxide (SiO2) and metal Si (Si) as raw materials, and the value of x is usually $0 \leq x < 2$. SiOx has a larger theoretical capacity than graphite, and an amorphous Si or nano-sized Si crystal allows an alkaline ion such as a lithium ion to easily enter and exit the same, making it possible to obtain a high capacity.

The Si metal oxide is specifically represented by SiOx, wherein x is $0 \leq x < 2$, more preferably 0.2 or more and 1.8 or less, further preferably 0.4 or more and 1.6 or less, and particularly preferably 0.6 or more and 1.4 or less, and X = 0 is especially preferable. Within this range, it is possible to provide a high capacity and at the same time reduce the irreversible capacity due to the bonding of Li and oxygen.

In addition, examples include a composite material containing Si or Sn as a first constituent element and second and third constituent elements in addition thereto. The second constituent element is, for example, at least one of cobalt, iron, magnesium, titanium, vanadium, chromium, manganese, nickel, copper, zinc, gallium, and zirconium. The third constituent element is, for example, at least one of boron, carbon, aluminum, and phosphorus.

The lithium-containing metal composite oxide material used as the negative electrode active material is not limited as long as it can absorb and desorb lithium, and is preferably a material containing titanium and lithium, more preferably a lithium-containing composite metal oxide material containing titanium, and further preferably a composite oxide of lithium and titanium (hereinafter, abbreviated as a "lithium-titanium composite oxide"), from the viewpoint of charge/discharge characteristics at high current density. That is, a lithium-titanium composite oxide having a spinel structure is particularly preferable because when it is contained in the negative electrode active material for an electrolytic solution battery and used, the output resistance is greatly reduced.

The lithium-titanium composite oxide is preferably a compound represented by the general formula:

$$Li_xTi_yM_zO_4$$

wherein M represents at least one element selected from the group consisting of Na, K, Co, Al, Fe, Ti, Mg, Cr, Ga, Cu, Zn, and Nb.

Among the above compositions, a structure satisfying one of the following:

(i) $1.2 \leq x \leq 1.4$, $1.5 \leq y \leq 1.7$, $z = 0$
(ii) $0.9 \leq x \leq 1.1$, $1.9 \leq y \leq 2.1$, $z = 0$
(iii) $0.7 \leq x \leq 0.9$, $2.1 \leq y \leq 2.3$, $z = 0$

is particularly preferable because the structure provides a good balance of battery performance.

A particularly preferable representative composition of the above compound is $Li_{4/3}Ti_{5/3}O_4$ for (i), $Li_1Ti_2O_4$ for (ii), and $Li_{4/5}Ti_{11/5}O_4$ for (iii) . In addition, preferable examples of the structure satisfying $Z \neq 0$ include $Li_{4/3}Ti_{4/3}Al_{1/3}O_4$.

The content of the electrode active material (positive electrode active material or negative electrode active material) is preferably 40% by weight or more in the electrode mixture in order to increase the capacity of the electrode obtained.

The electrode mixture may further contain a conductive agent. The conductive agent is an additive blended to improve conductivity, and examples thereof include a carbon powder such as graphite, Ketjen black, inverse opal carbon, or acetylene black, and various carbon fibers such as a vapor-grown carbon fiber (VGCF), a graphene sheet, and a carbon nanotube (CNT).

The electrode mixture of the present disclosure further contains a dispersion medium of an aqueous solvent or an organic solvent. Water is usually used as the aqueous solvent, and an alcohol such as ethanol or an organic solvent such as a cyclic amide such as N-methylpyrrolidone can also be used together with water in the range of 30% by weight or less based on water. Examples of the organic solvent include a nitrogen-containing organic solvent such as N-methyl-2-pyrrolidone, N,N-dimethylacetamide, or dimethylformamide; a ketone-based solvent such as acetone, methyl ethyl ketone, cyclohexanone, or methyl isobutyl ketone; an ester-based solvent such as ethyl acetate or butyl acetate; an ether-based solvent such as tetrahydrofuran or dioxane; and a general-purpose organic solvent having a low boiling point such as a mixed solvent thereof. Any one of these may be used alone, or two or more thereof may be used together in any combination and at any ratio. Among these, N-methyl-2-pyrrolidone and/or N,N-dimethylacetamide are preferable from the viewpoint of excellent stability and applicability of the electrode mixture.

In addition, a thickener can be used to stabilize the slurry. Examples of the thickener include carboxymethyl cellulose, methyl cellulose, hydroxymethyl cellulose, ethyl cellulose, polyvinyl alcohol, oxidized starch, phosphorylated starch, and casein. One of these may be used alone, or two or more thereof may be used together in any combination and at any ratio. The thickener may be used as needed, and when used, the content of the thickener in the negative electrode active material layer is usually preferably in the range of 0.5% by weight or more and 5% by weight or less.

The amount of the dispersion medium blended in the electrode mixture is determined in consideration of the applicability to the current collector, the thin film forming properties after drying, and the like. The proportion of the binder for an electrochemical device to the dispersion medium is preferably 0.5:99.5 to 20:80 in terms of weight ratio.

The electrode mixture may further contain, for example, an acrylic resin such as polymethacrylate or polymethylmethacrylate, a polyimide-, polyamide-, or polyamideimide-based resin, or the like in order to further improve the adhesiveness to the current collector. In addition, a cross-linking agent may be added and irradiation with a radiation such as a γ-ray or an electron beam can be performed to form a cross-linked structure. The cross-linking treatment method is not limited to irradiation with a radiation, and as another cross-linking method, for example an amine group-containing compound capable of thermal cross-linking, a cyanurate group-containing compound, or the like may be added for thermal cross-linking.

In order to improve the dispersion stability of the slurry, a dispersant such as a resin-based surfactant, a cationic surfactant, or a nonionic surfactant having a surface active action or the like may be added to the electrode mixture. Further, a conventionally known binder such as styrene-butadiene rubber, cellulose, polyvinylidene fluoride (PVdF), or polytetrafluoroethylene (PTFE) may be used together.

The content of the binder for an electrochemical device according to the present disclosure blended in the electrode mixture is preferably 0.05 to 20% by weight, and more preferably 1 to 10% by weight of the electrode mixture.

A method of preparing an electrode mixture containing the binder for an electrochemical device is generally a method in which the electrode active material is dispersed and mixed into a solution or a dispersion obtained by dissolving or dispersing the binder in the dispersion medium. Then, the obtained electrode mixture is uniformly applied to a current collector such as a metal foil or a metal mesh, dried, and pressed as necessary to form a thin electrode mixture layer on the current collector to prepare a thin-film electrode.

In addition thereto, for example, after the binder and the electrode active material is mixed first, the dispersion medium may be added to make a mixture. In addition, after the binder and the electrode active material is heated and melted and extruded using an extruder to make a thin film mixture, the thin film mixture can also be bonded onto a current collector coated with a conductive adhesive or a general-purpose organic solvent to make an electrode sheet. Further, a solution or a dispersion of the binder may be applied to the electrode active material preformed in advance. As described above, the method of application as a binder is not particularly limited.

(Electrode)

The present disclosure is also an electrode comprising the binder for an electrochemical device according to the present disclosure described above.

The electrode preferably has a current collector and an electrode material layer formed on the current collector and composed of the electrode active material and the binder for an electrochemical device. The effects of the present disclosure can be obtained regardless of whether the binder for an electrochemical device according to the present disclosure is used for a positive electrode or a negative electrode, and thus the binder for an electrochemical device according to the present disclosure is not limited to either electrode. In particular, the binder for an electrochemical device according to the present disclosure can follow the volume of the electrode active material during charge and discharge, and is preferably used for a high-capacity active material such as a Si-based negative electrode material.

Examples of the current collector (positive electrode current collector and negative electrode current collector) include a foil or a mesh of a metal such as iron, stainless steel, copper, aluminum, nickel, or titanium. Among these, aluminum foil or the like is preferable as the positive electrode current collector, and copper foil or the like is preferable as the negative electrode current collector.

The electrodes of the present disclosure can be produced, for example, by a method described above.

(Electrochemical device)

The present disclosure is also an electrochemical device comprising the electrode described above.

The electrochemical device is not particularly limited, and can be applied to a conventionally known electrochemical device. Specifical examples thereof include

a secondary battery such as a lithium ion battery, a primary battery such as a lithium battery, a radical battery, a solar cell (particularly a dye-sensitized solar cell), and a fuel cell;

a capacitor such as a lithium ion capacitor, a hybrid capacitor, or an electric double layer capacitor; various condensers such as an aluminum electrolytic condenser or a tantalum electrolytic condenser; and an electrochromic element, an electrochemical switching element, and various electrochemical sensors.

Among these, the electrochemical device can also be preferably used for a secondary battery which has a high capacity and a large output and thus causes a large volume change due to the movement of a large amount of a metal ion.

(Secondary battery)

The present disclosure is also a secondary battery comprising the electrode of the present disclosure described above. In the secondary battery of the present disclosure, at least one of the positive electrode and the negative electrode may be the electrode of the present disclosure described above, and the negative electrode is preferably the electrode of the present disclosure as described above. The secondary battery is preferably a lithium ion battery.

The secondary battery of the present disclosure preferably further includes a non-aqueous electrolytic solution. The non-aqueous electrolyte solution is not limited, and as the organic solvent, one or two or more of a known hydrocarbon-based solvent such as propylene carbonate, ethylene carbonate, butylene carbonate, γ-butyl lactone, 1,2-dimethoxyethane, 1,2-diethoxyethane, dimethyl carbonate, diethyl carbonate, ethyl methyl carbonate, or ethyl propionate; and a fluorine-based solvent such as fluoroethylene carbonate, fluoroether, fluorinated carbonate, or trifluoroethyl methyl carbonate can be used. Any conventionally known electrolyte can be used, and examples of the electrolyte that can be used include $LiClO_4$, $LiAsF_6$, $LiPF_6$, $LiBF_4$, LiCl, LiBr, $CH_3SO_3Li$, $CF_3SO_3Li$, $LiN(FSO_2)_2$, $LiN(CF_3SO_2)_2$, lithium bis(oxalato)borate, $LiPO_2F_2$, cesium carbonate.

In addition, a separator may be interposed between the positive electrode and the negative electrode. As the separator, a conventionally known separator may be used, or a separator using the binder for an electrochemical device according to the present disclosure described above for coating may be used.

Examples of the separator include conventionally known one, and specific examples thereof include a glass fiber separator that absorbs and retains an electrolytic solution, and a porous sheet or a non-woven fabric that is made of a polymer. The porous sheet is composed of, for example, a microporous polymer. Examples of the polymer composing such a porous sheet include a polyolefin such as polyethylene (PE) or polypropylene (PP); a laminate having a three-layer structure of PP/PE/PP, polyimide, and aramid. In particular, a polyolefin-based microporous separator and a glass fiber separator are preferable because they have the property of being chemically stable in an organic solvent and can suppress the reactivity with the electrolytic solution to a low level. The thickness of the separator composed of a porous sheet is not limited, and in the application of a secondary battery for driving a vehicle motor, the separator is preferably composed of a single layer or a multilayer having a total thickness of 4 to 60 μm. In addition, the separator composed of a porous sheet preferably has a fine pore size of at most 10 μm or less (usually about 10 to 100 nm) and a porosity of 20 to 80%.

Conventionally known nonwoven fabrics such as cotton, rayon, acetate, nylon (registered trademark), or polyester; a polyolefin such as PP or PE; polyimide, or aramid are used as the nonwoven fabric singly or by being mixed. The porosity of the nonwoven fabric separator is preferably 50 to 90%. Further, the thickness of the nonwoven fabric separator is preferably 5 to 200 μm, and particularly preferably 10 to 100 μm. If the thickness is less than 5 μm, retention of an electrolyte may worsen in some cases, and if the thickness exceeds 200 μm, the resistance may increase in some cases.

## Examples

Hereinafter, the present disclosure will be specifically described based on Examples. In the following Examples, unless otherwise specified, "parts" and "%" represent "parts by weight" and "% by weight," respectively.

### Synthesis Example 1 (synthesis of compound A)

To the reaction vessel, 21 mg (0.02 mmol) of 6-acrylamidomethyl-α-cyclodextrin, which is a polymerizable monomer having a host group, and pure water such the solution concentration after addition of acrylic acid, which will be described later, was 2 mol/kg were added to prepare a mixture (mixing step). The polymerizable monomer having a host group accounts for 1 mol% of all the polymerizable monomers.

The mixture was heated to 80°C or more and stirred, then 141 mg (1.96 mmol) of acrylic acid, 5 mg (0.02 mmol) of ammonium persulfate, and 3.0 μL of 2-(dimethylamino)ethyl]dimethylamine were added, and polymerization was performed at room temperature for 1 hour to obtain a polymer material.

### Synthesis Example 2 (synthesis of compound B)

A polymer material was obtained in the same manner as in Synthesis Example 1 except that the polymerizable monomer having a host group was 6-acrylamidomethyl-β-cyclodextrin.

### Synthesis Example 3 (synthesis of compound C)

A polymer material was obtained in the same manner as in Synthesis Example 1 except that the polymerizable monomer having a host group was 6-acrylamidomethyl-γ-cyclodextrin.

### Synthesis Example 4 (synthesis of compound D)

A polymer material was obtained in the same manner as in Synthesis Example 1 except that the polymerizable monomer having a host group was 6-acrylamidomethyl-γ-cyclodextrin and acrylamide was used instead of acrylic acid.

Synthesis Example 5 (synthesis of compound E)

47 mg (0.02 mmol) of peracetyl-6-acrylamidomethyl-γ-cyclodextrin, which is a polymerizable monomer having a host group, 71 mg (0.99 mmol) of acrylic acid, and 99 mg (0.99 mmol) of ethyl acrylate were mixed, and the resulting mixture was heated to 80°C or more and stirred. Hereinafter, the total number of moles of acrylic acid and ethyl acrylate will be referred to as the number of moles of the main monomers, and the molar ratio thereof will be referred to as the ratio of the main monomers.

To this mixture, the photoinitiator Irgacure 184 (0.02 mmol) was added, and ultraviolet irradiation was performed using a high-pressure mercury lamp for 5 minutes to obtain a polymer material as a cured product.

Synthesis Example 6 (synthesis of compound F)

A polymer material was obtained in the same manner as in Synthesis Example 5 except that the polymerizable monomer having a host group was peracetyl-6-acrylamidomethyl-γ-cyclodextrin, which was used in an amount of 0.01 mol, and the number of moles of the main monomers of acrylic acid and ethyl acrylate was 1.99 mol.

Synthesis Example 7 (synthesis of compound G)

A polymer material was obtained in the same manner as in Synthesis Example 5 except that the polymerizable monomer having a host group was peracetyl-6-acrylamidomethyl-γ-cyclodextrin, which was used in an amount of 0.04 mol, and the number of moles of the main monomers of acrylic acid and ethyl acrylate was 1.96 mol.

Synthesis Example 8 (synthesis of compound H)

A polymer material was obtained in the same manner as in Synthesis Example 5 except that the ratio of the main monomers was 20:80.

Synthesis Example 9 (synthesis of compound I)

A polymer material was obtained in the same manner as in Synthesis Example 5 except that the ratio of the main monomers was 40:60.

Synthesis Example 10 (synthesis of compound J)

A polymer material was obtained in the same manner as in Synthesis Example 5 except that the ratio of the main monomers was 60:40.

Synthesis Example 11 (synthesis of compound K)

A polymer material was obtained in the same manner as in Synthesis Example 5 except that the ratio of the main monomers was 80:20.

(Compound L)

Commercially available polyacrylic acid (manufactured by Aldrich, viscosity average molecular weight of 450,000) was used as compound L.

(Compound M)

Commercially available polyrotaxane (manufactured by Advanced Soft Materials Inc., trade name: SeRM Super Polymer SH3400M (weight average molecular weight of 400,000)) was used as compound M. Polyrotaxane is a material that exhibits high stretchability by a cyclic molecule sliding on a linear polymer, wherein the linear polymer is polyethylene glycol, the cyclic molecule is polycaprolactone graft α-cyclodextrin, and the terminal group is adamantanamine.

Synthesis Example 12 (Preparation of electrolytic solution)

Ethylene carbonate and fluoroethylene carbonate, which are high dielectric constant solvents, and ethyl methyl carbonate, which is a low viscosity solvent, were mixed in such a way as to have a volume ratio of 30/20/50, and $LiPF_6$

was added to the resulting mixture in such a way as to have a concentration of 1.5 mol/liter to obtain a non-aqueous electrolytic solution.

Examples 1 to 11 and Comparative Examples 1 and 2 (Making lithium ion secondary battery)

[Making positive electrode]

95% by weight of $LiNi_{1/3}Co_{1/3}Mn_{1/3}O_2$ (NMC) as a positive electrode active material, 2% by weight of acetylene black as a conductive material, and 3% by weight of polyvinylidene fluoride (PVdF) as a binder were mixed in a N-methylpyrrolidone solvent to form a slurry. The obtained positive electrode mixture slurry was uniformly applied onto an aluminum foil current collector having a thickness of 15 μm, dried, and then compression-molded using a press to obtain a positive electrode laminate. The positive electrode laminate was punched out to a size having a diameter of 1.6 cm using a punching machine to make a circular positive electrode material.

[Making negative electrode]

Artificial graphite powder and amorphous silicon (SiO) as negative electrode active materials and the predetermined polymer of the present disclosure were mixed in such a way as to have a solid ratio of 60/32/8 (weight% ratio) to provide a slurry negative electrode mixture slurry. The slurry was uniformly applied to a copper foil having a thickness of 10 μm, dried, and then compression-molded using a press to obtain a negative electrode. This was punched out to a size having a diameter of 1.6 cm using a punching machine to make a circular negative electrode material.

[Making coin cell]

The circular positive electrode and negative electrode were opposed to each other through a microporous polyethylene film (separator) having a thickness of 20 μm, and the non-aqueous electrolytic solution obtained above was injected; after the non-aqueous electrolytic solution sufficiently permeated into the separator or the like, the workpiece was sealed, precharged, and aged to make a coin type lithium ion secondary battery.

Example 12

A lithium ion secondary battery was made in the same manner as in Example 1 except that the solid ratio of the artificial graphite powder and amorphous silicon (SiO), compound I, and compound L was changed to 60/32/3/5 (weight% ratio).

Example 13

A lithium ion secondary battery was made in the same manner as in Example 1 except that the solid ratio of the artificial graphite powder and amorphous silicon (SiO), compound I, and an aqueous dispersion of sodium carboxymethylcellulose (CMC) (concentration of sodium carboxymethylcellulose of 1% by weight) were used and the solid ratio of CMC was changed to 60/32/6/2 (weight% ratio) .

Comparative Example 3

60 % by weight and 32 % by weight of artificial graphite powder and amorphous silicon (SiO), respectively, as negative electrode active materials, 4 % by weight, in terms of solid of sodium carboxymethylcellulose, of an aqueous dispersion of sodium carboxymethylcellulose (concentration of sodium carboxymethylcellulose of 1% by weight) used as a thickener, and 4 % by weight, in terms of solid of styrene-butadiene rubber, of an aqueous dispersion of styrene-butadiene rubber (SBR) (concentration of styrene-butadiene rubber of 50% by weight) used as a binder were added; and these were mixed using a disperser to form a slurry. This slurry was uniformly applied to one side of a copper foil having a thickness of 10 μm, dried, and then pressed to obtain a negative electrode.

A lithium ion secondary battery was prepared in the same manner as in Example 1 except that the negative electrode thus obtained was used.

(Measurement of battery characteristics)

(Cycle capacity retention)

The secondary battery produced above was subjected to constant current-constant voltage charge (hereinafter, referred to as "CC/CV charge") up to 4.1 V at a current corresponding to 1 C (0.1 C cut off) at 45°C, then the battery was discharged to 3 V at a constant current of 1 C, and when this process was defined as one cycle, the initial discharge capacity was determined from the discharge capacity of the first cycle. Here, 1 C represents a current value for discharging the reference capacity of a battery over one hour, and for example, 0.1 C represents a current value that is 1/10 of the above current value. After CC/CV charge (0.1 C cut off) was performed again to 4.1 V, charge and discharge were performed in the same manner, and the discharge capacity after 100 cycles was measured. The proportion of the discharge capacity after 100 cycles to the initial discharge capacity was determined based on the following expression, and this was taken as the cycle capacity retention (%). The measurement temperature was 45°C. Results are shown in the following Table 1.

(Discharge capacity after 100 cycles) / (initial discharge capacity) × 100 = cycle capacity retention (%)

(Resistance increase rate)

The charge/discharge cycle performed under predetermined charge/discharge conditions (charge at a predetermined voltage at 1 C until the charge current reaches 0.05 C and discharge to 3.0 V at a current corresponding to 1 C) was defined as one cycle, and the resistance after 3 cycles and the resistance after 100 cycles were measured. The measurement temperature was - 10°C. The resistance increase rate was determined based on the following expression. Results are shown in the following Table 1.

Resistance increase rate (%) = resistance after 100 cycles (Ω) / resistance after 3 cycles (Ω) × 100

When compounds A to K were immersed in acetone at 25°C and a swelling test was performed, it was found that the swelling ratio exceeded 2000%. Because compounds A to K were swollen with acetone, it was found that they had a crosslinked structure although no chemical cross-linking agent was used. Therefore, it is presumed that compounds A to K form a movable crosslinked polymer formed by the polymer of ethyl acrylate penetrating through the ring of the host group.

The swelling ratio was calculated based on the following expression:

Swelling ratio (%) = (weight after swelling / weight before swelling) × 100.

[Table 1]

| | Example 1 | Example 2 | Example 3 | Example 4 | Example 5 | |
|---|---|---|---|---|---|---|
| Polymer component (% by weight in negative electrode mixture) | Compound A (8) | Compound B (8) | Compound C (8) | Compound D (8) | Compound E (8) | |
| Capacity retention (%) | 64 | 66 | 65 | 63 | 77 | |
| Resistance increase rate (%) | 245 | 241 | 232 | 228 | 211 | |
| | | | | | | |
| | Example 6 | Example 7 | Example 8 | Example 9 | Example 10 | |
| Polymer component (% by weight in negative electrode mixture) | Compound F (8) | Compound G (8) | Compound H (8) | Compound I (8) | Compound J (8) | |
| Capacity retention (%) | 70 | 72 | 69 | 75 | 80 | |
| Resistance increase rate (%) | 223 | 215 | 219 | 218 | 212 | |
| | | | | | | |
| | Example 11 | Example 12 | Example 13 | Comparative Example 1 | Comparative Example 2 | Comparative Example 3 |
| Polymer component (% by weight in negative electrode mixture) | Compound K (8) | Compound I (3) Compound L (5) | Compound I (6) CMC (2) | Compound L (8) | Compound M (8) | CMC(4) SBR (4) |
| Capacity retention (%) | 81 | 70 | 65 | 51 | 54 | 52 |
| Resistance increase rate (%) | 210 | 234 | 241 | 273 | 314 | 261 |

From the results in Table 1, it became clear that the lithium ion batteries of the Examples using the binder of the present disclosure exhibit excellent life characteristics because the discharge capacity retention after the cycle characteristic test is high. Further, the resistance increase rates of the lithium ion batteries of the Examples were clearly smaller than those of the Comparative Examples, and thus it was shown that the volume changes of the electrodes in the Examples were smaller than those in the Comparative Examples.

Industrial Applicability

Use of the binder for an electrochemical device according to the present disclosure can improve the life characteristics of electrochemical devices, and particularly high-power secondary batteries, that can be used as various power sources such as a portable power source and an automobile power source.

## Claims

1. A binder for an electrochemical device, which is a binder for a secondary battery comprising a polymer having at least one cyclic host group in a molecule,

wherein
the host group is present as a side chain of the polymer, and
a main chain of the polymer penetrates through at least a part of the cyclic host groups.

**2.** A binder for an electrochemical device, which is a binder for a secondary battery comprising a polymer material containing a polymer having at least one cyclic host group in a molecule, wherein
the polymer is a polymer containing, in at least a part thereof, a constituent unit formed of a host group-containing polymerizable monomer, and represented by the following general formula (2a):

[Formula 1]

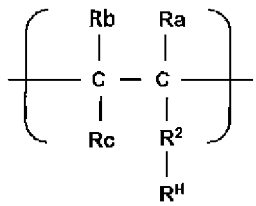

(2a)

wherein Ra represents a hydrogen atom, a methyl group, or a fluorine group; Rb represents a hydrogen atom or a fluorine group; Rc represents a hydrogen atom or a fluorine group; $R^2$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxy group, or $-C(O)NH-(CH_2)_n-O-C(O)-$ (n is 2 to 8); and $R^H$ represents the host group.

**3.** A binder for an electrochemical device, which is a binder for a secondary battery comprising a polymer material containing a polymer having at least one cyclic host group in a molecule, wherein
the polymer is a polymer containing, in at least a part thereof, a constituent unit formed of a host group-containing polymerizable monomer and represented by the following general formula (h1):

[Formula 2]

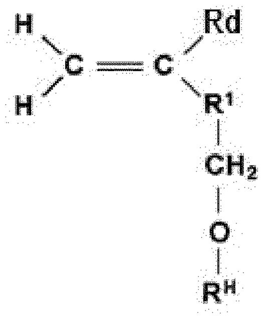

(h1)

wherein Rd represents a hydrogen atom or a methyl group; $R^H$ represents the host group; and $R^1$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxyl group.

**4.** An electrode mixture comprising the binder for an electrochemical device according to any one of claims 1 to 3, an electrode active material, and a dispersion medium.

**5.** An electrode comprising the binder for an electrochemical device according to any one of claims 1 to 3, an electrode

active material, an electrolytic solution, and a current collector.

6. The electrode according to claim 5, wherein the electrode is a positive electrode.

7. The electrode according to claim 5, wherein the electrode is a negative electrode.

8. The electrode according to claim 5, wherein the electrode active material contains a carbonaceous material in at least a part thereof.

9. The electrode according to claim 5, wherein the electrode active material contains a silicon-containing compound in at least a part thereof.

10. An electrochemical device comprising the electrode according to any one of claims 5 to 9.

11. A secondary battery comprising the electrode according to any one of claims 5 to 9.

12. The secondary battery according to claim 11, wherein the secondary battery is a lithium ion battery.

**Amended claims under Art. 19.1 PCT**

1. (Currently amended) A binder for an electrochemical device comprising a polymer having at least one cyclic host group in a molecule, wherein the host group is present as a side chain of the polymer, and
a main chain of the polymer penetrates through at least a part of the cyclic host groups.

2. (Currently amended) A binder for an electrochemical device comprising a polymer material containing a polymer having at least one cyclic host group in a molecule, wherein
the polymer is a polymer containing, in at least a part thereof, a constituent unit formed of a host group-containing polymerizable monomer, and represented by the following general formula (2a):

[Formula 1]

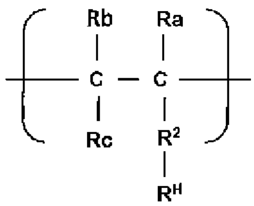

(2a)

wherein Ra represents a hydrogen atom, a methyl group, or a fluorine group; Rb represents a hydrogen atom or a fluorine group; Rc represents a hydrogen atom or a fluorine group; $R^2$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxy group, or - $C(O)NH-(CH_2)_n-O-C(O)-$ (n is 2 to 8); and $R^H$ represents the host group.

3. (Currently amended) A binder for an electrochemical device comprising a polymer material containing a polymer having at least one cyclic host group in a molecule, wherein
the polymer is a polymer containing, in at least a part thereof, a constituent unit formed of a host group-containing polymerizable monomer and represented by the following general formula (h1):

[Formula 2]

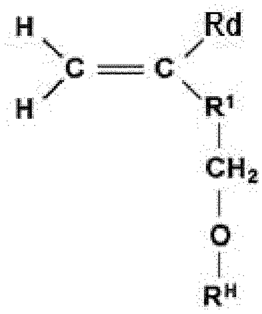

(h1)

wherein Rd represents a hydrogen atom or a methyl group; $R^H$ represents the host group; and $R^1$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxyl group.

**4.** (Original) An electrode mixture comprising the binder for an electrochemical device according to any one of claims 1 to 3, an electrode active material, and a dispersion medium.

**5.** (Original) An electrode comprising the binder for an electrochemical device according to any one of claims 1 to 3, an electrode active material, an electrolytic solution, and a current collector.

**6.** (Original) The electrode according to claim 5, wherein the electrode is a positive electrode.

**7.** (Original) The electrode according to claim 5, wherein the electrode is a negative electrode.

**8.** (Original) The electrode according to claim 5, wherein the electrode active material contains a carbonaceous material in at least a part thereof.

**9.** (Original) The electrode according to claim 5, wherein the electrode active material contains a silicon-containing compound in at least a part thereof.

**10.** (Original) An electrochemical device comprising the electrode according to any one of claims 5 to 9.

**11.** (Original) A secondary battery comprising the electrode according to any one of claims 5 to 9.

**12.** (Original) The secondary battery according to claim 11, wherein the secondary battery is a lithium ion battery.

## INTERNATIONAL SEARCH REPORT

International application No.
PCT/JP2020/009217

A. CLASSIFICATION OF SUBJECT MATTER
C08F 220/54(2006.01)i; H01M 4/13(2010.01)i; H01M 4/133(2010.01)i; H01M 4/62(2006.01)i; H01G 11/38(2013.01)i
FI: H01M4/62 Z; H01M4/133; H01M4/13; C08F220/54; H01G11/38
According to International Patent Classification (IPC) or to both national classification and IPC

B. FIELDS SEARCHED
Minimum documentation searched (classification system followed by classification symbols)
C08F220/54; H01M4/13; H01M4/133; H01M4/62; H01G11/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JST7580 (JDreamIII); CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 2002-117899 A (MATSUSHITA ELECTRIC INDUSTRIAL CO., LTD.) 19.04.2002 (2002-04-19) claims | 1-12 |
| A | JP 2016-162543 A (YAMAGUCHI UNIVERSITY) 05.09.2016 (2016-09-05) claims | 1-12 |
| A | JP 2018-016704 A (NISSAN CHEMICAL INDUSTRIES, LTD.) 01.02.2018 (2018-02-01) claims | 1-12 |
| A | JP 2018-111788 A (OSAKA UNIVERSITY, TOYOTA MOTOR CORP.) 19.07.2018 (2018-07-19) claims | 1-12 |
| A | JP 2018-204004 A (OSAKA UNIVERSITY, TOYOTA MOTOR CORP.) 27.12.2018 (2018-12-27) claims | 1-12 |
| A | WO 2018/159791 A1 (OSAKA UNIVERSITY) 07.09.2018 (2018-09-07) claims | 1-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 May 2020 (19.05.2020) | 02 June 2020 (02.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/009217

C (Continuation). DOCUMENTS CONSIDERED TO BE RELEVANT

| Category* | Citation of document, with indication, where appropriate, of the relevant passages | Relevant to claim No. |
|---|---|---|
| A | WO 2018/038186 A1 (DAIKIN INDUSTRIES, LTD., OSAKA UNIVERSITY) 01.03.2018 (2018-03-01) claims | 1-12 |
| A | JP 2018-174038 A (TDK CORPORATION) 08.11.2018 (2018-11-08) claims | 1-12 |
| P, A | JP 2019-204719 A (TOYOTA INDUSTRIES CORPORATION, OSAKA UNIVERSITY) 28.11.2019 (2019-11-28) claims | 1-12 |

Form PCT/ISA/210 (continuation of second sheet) (January 2015)

**INTERNATIONAL SEARCH REPORT**
Information on patent family members

International application No.
PCT/JP2020/009217

| Patent Documents referred in the Report | Publication Date | Patent Family | Publication Date |
|---|---|---|---|
| JP 2002-117899 A | 19 Apr. 2002 | US 2002/0061448 A1 claims<br>EP 1198022 A2 | |
| JP 2016-162543 A | 05 Sep. 2016 | (Family: none) | |
| JP 2018-016704 A | 01 Feb. 2018 | (Family: none) | |
| JP 2018-111788 A | 19 Jul. 2018 | US 2018/0201814 A1 claims<br>DE 102018000202 A1 | |
| JP 2018-204004 A | 27 Dec. 2018 | (Family: none) | |
| WO 2018/159791 A1 | 07 Sep. 2018 | EP 3590972 A1 claims | |
| WO 2018/038186 A1 | 01 Mar. 2018 | US 2019/0177455 A1 claims<br>EP 3505572 A1 | |
| JP 2018-174038 A | 08 Nov. 2018 | (Family: none) | |
| JP 2019-204719 A | 28 Nov. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014065407 A
- JP 2018174038 A
- WO 2018159791 A